Europäisches Patentamt

European Patent Office

Office européen des brevets

(11) Publication number: **0 284 178**
A2

## (12) EUROPEAN PATENT APPLICATION

(21) Application number: 88300533.2

(22) Date of filing: 22.01.88

(51) Int. Cl.⁴: **A23L 1/325**

(30) Priority: 23.03.87 JP 68481/87

(43) Date of publication of application:
**28.09.88 Bulletin 88/39**

(84) Designated Contracting States:
**DE FR GB**

(71) Applicant: **KABUSHIKI KAISHA IKEUCHI
TEKKOSHO**
**1-9-9 Tamachi
Akashi 673(JP)**

(72) Inventor: **Ikeuchi, Hiroji**
**9-17, Tamachi 1-chome
Akashi 673(JP)**
Inventor: **Ikeuchi, Kiyoaki**
**9-17, Tamachi 1-chome
Akashi 673(JP)**

(74) Representative: **Hayward, Denis Edward Peter
et al
Lloyd Wise, Tregear & Co. Norman House
105-109 Strand
London WC2R 0AE(GB)**

(54) **Shrimp-shaped food product.**

(57) A shrimp-shaped fish paste food product resembling the shelled meat of shrimp and having the shape of the torso of a shrimp with the head removed. The food product is formed mainly of ground fish meat paste which has the smell, taste, and texture of shrimp; the product is formed by injecting the raw paste under pressure into a mold cavity where it is heated and solidified, and the exterior surfaces of the torso of the shrimp-shaped product are colored using a food coloring agent in such a manner that differences in shading are provided between the joints and the parts of the torso between the joints.

# SHRIMP-SHAPED FOOD PRODUCT

This invention relates to a food product made from a fish paste, which has the shape of the torso of a shrimp, and which is provided with a texture and coloring closely resembling that of real shrimp. It is, however, to be understood that whereas in this specification and claims the word "shrimp" is used throughout, this word is intended to include all of the same family, e.g. prawn, crayfish etc.

There exists prior art bar-shaped fish paste products which are formed in the shape of crab legs; thin fibers of fish meat are formed into bundles and shaped to resemble crab legs, given a taste or flavor resembling that of crab legs, and given a red food coloring agent that colors them similar to crab legs. Moreover, the bar-shaped products are cut to lengths corresponding to that of actual crab legs. However, until this invention there has not been provided a product made from fish meat paste which has the shape of the shelled meat of shrimp.

Because the shape of a shrimp is relatively complex, there is present the problem that the shape cannot be achieved by the same type of simple food product processing method as described above for crab legs. Simply injecting the fish paste into a mold and heating it would not produce the texture and taste of shrimp, and it would also not provide the color differences between the joints and the flat parts of the shrimp torso, thus failing to produce a product having the appetizing qualities and color of real shrimp.

This invention comprises a shrimp-shaped fish paste food product resembling the shelled meat of shrimp and having the shape of the torso of a shrimp with the head removed. The food product is formed mainly of ground fish meat paste which has the smell, taste, and texture of shrimp; the product is formed by injecting the raw paste under pressure into a mold cavity where it is heated and solidified, and the exterior surfaces of the torso of the shrimp-shaped product are colored using a food coloring agent in such a manner that differences in shading are provided between the joints and the parts of the torso between the joints.

The invention will be better understood from the following detailed description taken in conjunction with the accompanying figures of the drawings, wherein:

Fig. 1 is a perspective view of a food product in accordance with this invention; and

Fig. 2 shows an example of the inside of a mold for practicing this invention.

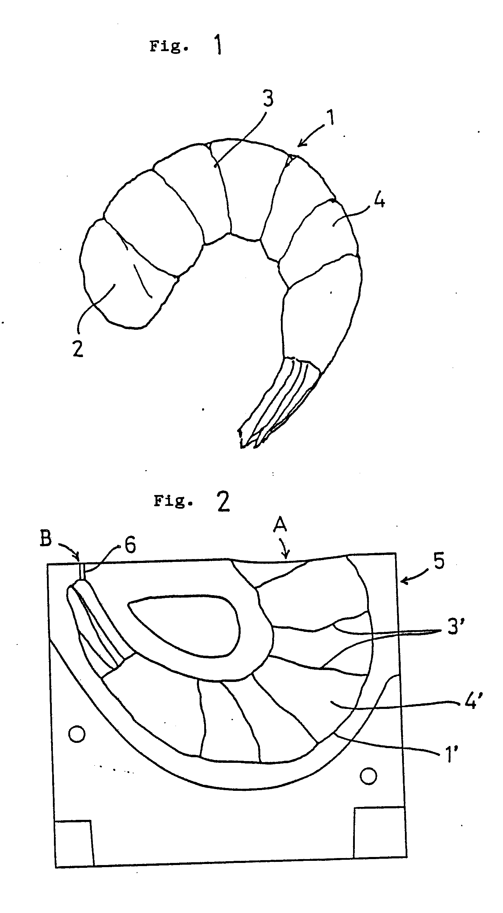

In Fig. 1, the body or torso 1 of a food product having the shape of a shrimp, includes a protruding meat part 2, which is formed when the raw fish paste swells and protrudes out of the mold's injection port during the heating and solidifying steps of the process. This protruding meat part is provided so that the product will resemble the shape of a real shrimp from which the head has been pulled off from the part 2, and therefore the protruding meat part 2 is not colored. The numeral 3 indicates the joints and 4 indicates the flat areas between the joints 3. The joints 3 are colored darkly on one side or not at all on the other side, and the flat areas 4 are colored lightly.

To practice the process for producing the food product, a mold is employed and Fig. 2 shows the inside of a mold half 5. The shrimp-shaped mold cavity 1' is comprised of joints 3' and flat areas 4' between the joints. The letter A is the head side and the letter B is the tail side. An air escape hole 6 is provided when the raw fish paste is injected into the mold through the injection opening at the head side A.

The torso of a shrimp has joints in order to allow the shrimp to contract its body, and even when the shrimp is peeled, the joints remain as ridges in the shape of the removed shell. When this shape is transferred to a mold, the depressions and protrusions are reversed, and reversed-shape joints are formed in positions corresponding to the joints in the torso of the shrimp.

Prior to the filling of the mold with the raw fish paste, a water-based food coloring agent is sprayed into the mold by a nozzle from the head side A. Alternatively a paste-like coloring agent made by mixing together raw fish paste and a coloring agent is spread around the edge of the injection opening at the head side A. Then the raw fish paste is injected from the head side A, following which the mold is heated so that the raw fish paste solidifies, thus producing a food product having the shape, as shown in Fig. 1, of the shelled meat of a real shrimp.

The raw material comprises mainly raw ground fish meat and solid chip pieces. The chip pieces are formed by subjecting ground fish meat to a so-called setting process, where it is heated to approximately 90°C so that it solidifies, and then the solidified fish paste is cut into thin scale-shaped or strip-shaped chip pieces. Furthermore, to the raw fish paste which is blended in order to combine and mix the chip pieces, an extract is added in order to provide the desired smell, flavor and appetizing qualities of shrimp.

In the above-mentioned setting process, when the raw ground fish meat is allowed to set, it gradually solidifies and the fish meat paste develops a gelatinous elasticity. This state will vary according to the freshness of the fish, the setting temperature, and the length of time it is allowed to set. When the product in the set state is then heated, it produces a glutinous product.

As mentioned above, the raw material which is injected under pressure into the mold and heated so that it solidifies consists mainly of ground fish meat. The objective is to produce a processed food product which closely resembles the shelled meat of real shrimp which has been cooked and has had the shell removed, but by simply heating the ground fish meat so that it solidifies, the resulting product would be just the same as boiled fish paste (Japanese Kamaboko). One of the appetizing characteristics of cooked shrimp is the texture of the muscle fibers when chewed.

For this reason, some ground fish meat is heated to approximately 90°C in the so-called setting process so that it solidifies, and from this, thin scale-shaped or strip-shaped chip pieces are made, and these chip pieces are mixed into the raw fish paste. Furthermore, to the raw fish paste which is blended in order to combine the chip pieces, an extract is added in order to provide the desired smell, taste and appetizing qualities.

Before the two halves of the split mold are fitted together and the raw paste is injected, the water-based food coloring agent is sprayed onto the inside surfaces of the mold halves. Although the sprayed coloring agent adheres to the inside walls of the mold, the joints formed inside the mold act as barrier ridges, and the coloring agent gathers on the sprayed side, or upstream side, of these walls, thus making it difficult for the coloring agent to adhere to the flat areas between the joints.

Or, as a different coloring means, a food dye and raw fish paste are mixed together to form a paste-like coloring agent. This paste-like coloring agent is spread onto the injection port of the mold prior to injection of the raw fish paste, and, when the raw fish paste is subsequently injected, the coloring agent is moved into the mold along with the paste as the raw fish paste is injected, thus coloring the product.

In this way, the adherence of the coloring agent is thicker on the joints and thinner on the flat areas between the joints.

Even when the fish paste food product of this invention is used as an appetizer, for deep frying, or cut up and stir-fried in the same way as real cooked shrimp, it compares favorably with real shrimp in shape, smell, texture, and color, thus allowing it to be used in all types of cooking.

When the raw fish paste passes over the joints 3' inside the shrimp mold 1', much of the coloring agent collects on the upstream sides of the joints 3'; or when the raw fish paste passes over the joints, the joints are not colored at all on the downstream sides. The coloring agent collects to a less extent on the flat areas 4' between the joints, but moves together with the raw fish paste, so these areas 4' are lightly colored. When the raw fish paste is subsequently heated and solidified, the coloring agent is transferred from the inside surfaces of the mold to the surfaces of the food product, thus providing a coloring resembling that of a real shrimp.

Because the raw fish paste which is injected into the mold is solidified and formed by heating the mold, the resulting product has the same shape as the body or torso of a real shrimp. Moreover, the heating is performed with the raw fish paste protruding out of the mold's injection port, and this causes the raw fish paste at the mold's injection port to protrude even further, thus resulting in a shape resembling a real shrimp from which the head has been pulled off. The formed product is then removed from the mold.


EXAMPLE:

The following is a list of the ingredients of a food product according to the invention:
100 kg of <u>shredded meat</u> (solid chip pieces) consisting of:

70 kg of ground fish meat,
1.5 keg of salt,
2 kg of starch and
26.5 kg of water.

100 kg of <u>binder meat</u> consisting of:

80 kg of ground fish meat,
1.5 kg of salt,
3 kg of starch,
15.5 kg of water,
a small amount of natural shrimp extract,
a small amount of natural or synthetic shrimp flavor and
a small amount of dye (cochineal or paprika).

The shredded meat and the binder meat are in the ratio 1:1.

Using this production process, it is possible to produce a food product with the same appetizing qualities as the shelled meat of shrimp from raw material consisting of ground fish meat combined with a binding agent. In addition, using this type of process, it is also possible to make various other food products, such as a simulated lobster food product, etc.

As explained herein, this invention comprises a fish paste food product comprised mainly of ground fish meat, and this food product has the shape, coloring, and appetizing qualities of real shrimp. Thus, the invention is effective in making it possible to provide large quantities of inexpensive identical-size shrimp for use in food service establishments and for household use.

## Claims

1. A food product comprising a body having a shape resembling the shelled meat of the torso of a shrimp with the head removed, said body comprising ground fish meat and an extract and having the smell, taste, and texture of shrimp, and a food coloring on the exterior surfaces of said torso, said torso having joints and areas between the joints, and said coloring having differences in shading between said joints and said parts between the joints.

2. A food product according to Claim 1, wherein the fish meat body includes fish meat of two different textures mixed together in order to better simulate a real shrimp.

Fig. 1

Fig. 2